# FASCICULE DE BREVET EUROPEEN

(11) **EP 3 386 795 B1**
(45) Date de publication et mention de la délivrance du brevet: **26.10.2022**
(21) Numéro de dépôt: 16819996.6
(22) Date de dépôt: 08.12.2016
(51) Int. Cl.: B60N 2/75

(54) **AGENCEMENT DE MONTAGE D'UN ACCOUDOIR SUR UNE PORTIÈRE DE VÉHICULE**
ANORDNUNG ZUR MONTAGE EINER ARMLEHNE AN EINER FAHRZEUGTÜR
ARRANGEMENT FOR MOUNTING AN ARMREST ON A VEHICLE DOOR

(30) Priorité: 08.12.2015 FR 1561954
(43) Date de publication de la demande: 17.10.2018
(73) Titulaire: PSA Automobiles SA, 78300 Poissy (FR); Simoldes Plásticos, SA, Oliveira de Azeméis, 3721-902 Santiago de Riba-UL (PT)
(72) Inventeur: MICHEL, Xavier, 77340 Pontault Combault (FR); BELLINATO, Eric, 91650 Breuillet (FR); MARIA FERNANDES RIBEIRO, Cristina, 4450-069 Matosinhos (PT); PEREIRA MAGALHAES, Joao, 4520-145 Santa Maria Da Feira (PT)
(74) Mandataire: Fernandez, Francis Lionel
(86) Numéro de dépôt international: PCT/FR2016/053279
(87) Numéro de publication internationale: WO 2017/098167

(56) Documents cités:
- WO-A1-2008/040421
- US-A- 5 803 415

## Description

L'invention se situe dans le domaine de l'aménagement intérieur d'un habitacle de véhicules notamment de permettre le choix et le montage d'une diversité d'accoudoirs sur un garnissage de portière de véhicule.

L'invention porte également sur un véhicule automobile équipé d'un tel agencement.

Généralement, les portières de véhicules sont livrées par le fournisseur de façon synchrone pour être assemblées sur les véhicules en cours de montage. Afin d'assurer le montage d'une diversité d'accoudoir sur une structure de portière de garnissage unique, il a été prévu de monter l'accoudoir sur la portière assemblée sur la ligne de montage. Le document WO2008040421 divulgue une pièce d'équipement constituée par le montage d'un composant sur un second composant dans l'habitacle d'un véhicule. Le premier composant comporte des saillies insérables dans des évidements du second composant permettant de réaliser la fixation par déformation des saillies. Pour cela, lorsque les saillies ont été introduites dans les évidements, les sur longueurs des saillies sont repliées contre la paroi du second composant. On comprend que cet assemblage nécessite l'accès à l'arrière de la paroi pour replier la saillie. Dans le cas du montage de l'accoudoir sur une portière équipée, ce montage n'est pas possible. De plus, le montage de l'accoudoir requière une tenue mécanique renforcée afin qu'il ne soit pas éjecté vers le conducteur ou un passager du véhicule, en cas de choc latéral.

Le document US5803415 décrit un panneau de porte sur lequel est monté un accoudoir par translation.

Dans ce contexte, la présente invention vise la conception d'un accoudoir répondant à ces exigences. L'accoudoir peut être facilement assemblé sur la portière déjà installée sur la ligne de montage pour pallier aux inconvénients de la diversité plus compliqué et plus onéreux à gérer chez le fournisseur et de plus il ne risque pas d'être éjecté en cas de choc sur la portière du véhicule.

A cet effet l'invention propose un agencement de l'assemblage d'un accoudoir sur la garniture d'une portière comportant ladite garniture et ledit accoudoir, l'accoudoir étant assemblé sur des moyens de rétention de la garniture de la portière, conçu sur un bord d'ouvertures par des moyens de clippage dirigés suivant une direction latérale de la portière qui correspond à la direction longitudinale de l'accoudoir. L'accoudoir est une coque. Les moyens de clippage sont constitués sous la forme d'éléments d'accroche comprenant un corps prolongé par un biseau et sont répartis sur le pourtour interne de la coque formant l'accoudoir.

Selon une variante, les moyens de clippage sont en saillie par rapport au bord de l'accoudoir.

Selon une variante, l'élément d'accroche comporte un logement dont la largeur se rétrécit suivant une paroi inclinée en direction du fond.

Avantageusement, le logement comporte à proximité de son ouverture une saillie de forme carrée orientée vers l'extrémité du biseau.

Selon une autre variante, les moyens de rétention sont constitués de proéminence à l'extrémité des ouvertures réparties sur la garniture de la portière de manière à permettre l'introduction d'éléments d'accroche.

De façon avantageuse, les ouvertures sont des fentes comportant une extrémité oblique vers l'extérieur et une seconde extrémité oblique vers l'intérieur aptes à coopérer avec des chanfreins du moyen de clippage de façon à faciliter l'engagement des dits moyens de clippage sur les moyens de rétention.

Selon une autre variante, la paroi inclinée de la proéminence coopère avec la paroi inclinée ménagée sur le biseau lors de l'engagement de la saillie de forme carrée se verrouillant dans un creux localisé à la base de la proéminence, réalisant la tenue de l'accoudoir sur la garniture de la portière par coincement.

L'invention sera bien comprise et d'autres aspects et avantages apparaîtront clairement à la lecture de la description qui suit, donnée à titre d'exemple par rapport aux figures annexées sur lesquelles :
- La figure 1 est une vue schématique en perspective de l'agencement du garnissage d'une portière apte à accueillir selon l'option le modèle d'accoudoir choisi dans une diversité de modèle ;
- La figure 2 est une vue schématique en perspective de l'intérieur d'un accoudoir sur lequel sont répartis les éléments d'accroches ;
- La figure 3 présente une vue schématique partielle en perspective du garnissage d'une portière sur laquelle, on présente un accoudoir pour effectuer son montage sur la portière ;
- La figure 4 présente une vue partielle en plan de dessus de la face interne d'une portière sur laquelle l'accoudoir représenté partiellement est monté dans sa position d'utilisation ;
- La figure 5 est une vue partielle en section agrandie d'un élément d'accroche en prise dans une proéminence ménagée dans l'ouverture la face interne d'une portière.

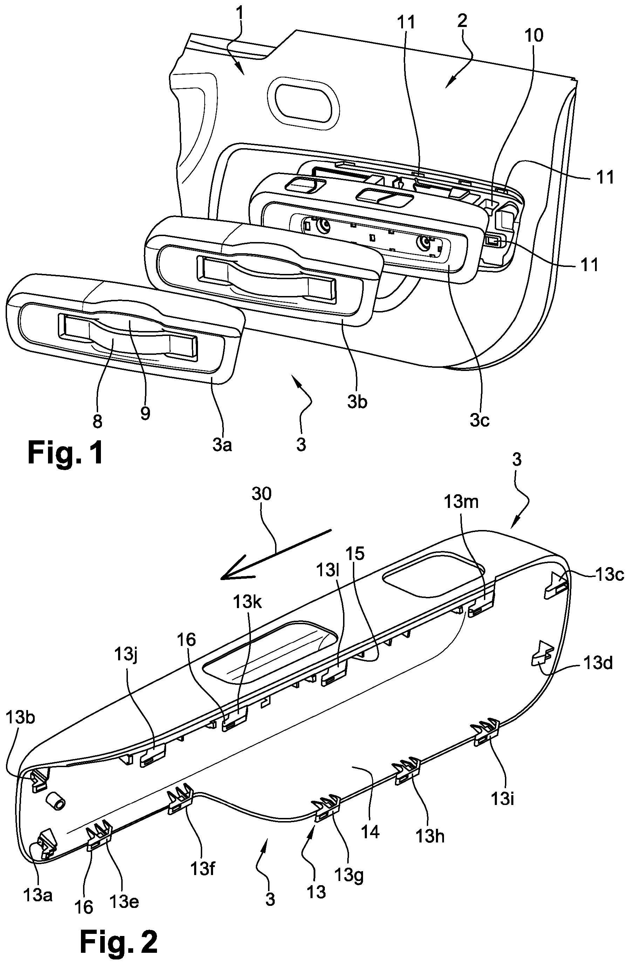

La figure 1 est une vue schématique en perspective de l'agencement 1 du garnissage d'une portière 2 apte à accueillir selon l'option le modèle d'accoudoir 3 choisi dans une diversité de modèle 3a, 3b, 3c. L'agencement 1 de montage de l'accoudoir 3 sur le garnissage de la portière 2 doit permettre de le placer et de l'assembler rapidement sans risque de le désassembler fortuitement. Par ailleurs, en cas de chocs latéral, l'accoudoir 3 ne doit pas être projeté vers le conducteur ou le passager, il doit rester solidaire de la portière 2. A cet effet, la portière 2 est disposée pour recevoir un accoudoir 3 répondant à la demande du client. Ainsi, l'accoudoir 3, peut-être l'accoudoir 3a, 3b, 3c ou d'autres modèles adaptables indifféremment sur la portière 2 du véhicule. Sur la figure, on peut voir que la forme des accoudoirs 3a, 3b, 3c est identique, il est de forme sensiblement parallélépipédique et il comporte notamment une poignée 8 en forme de sangles en regard d'un évidement 9 sur leurs faces extérieures. Bien évidemment la face supérieure de l'accoudoir permet de poser le bras de l'utilisateur placé à proximité. L'accoudoir 3a est présenté en vis à vis d'une zone en retrait 10 de forme sensiblement rectangulaire, aménagée pour engager l'accoudoir 3 comportant des moyens de clippage 13. Cette zone en retrait 10 comporte en bordure une série d'ouvertures 11 régulièrement réparties sur le pourtour de forme rectangulaire. Ces ouvertures 11 sont des fentes qui permettent d'introduire les moyens de clippage de l'accoudoir 3 sur des moyens de rétention qui seront décrits plus loin.

La figure 2 est une vue schématique en perspective de l'intérieur d'un accoudoir 3 sur lequel sont répartis les moyens de clippage 13 constitués sous forme d'éléments d'accroches. L'accoudoir 3 est une coque dont la forme parallélépipédique est échancrée à l'extrémité avant 5 dirigée suivant l'axe longitudinal du véhicule et correspondant au sens de verrouillage de l'accoudoir 3. L'accoudoir 3 comporte sur sa périphérie interne une pluralité d'éléments d'accroches 13. Ces éléments d'accroches 13 sont en saillie par rapport au bord de l'accoudoir 3 notamment les éléments d'accroche 13e, 13f, 13g, 13h, 13i, 13j, 13k, 13l, 13m, sur les bordures longitudinales 14, 15. Deux éléments d'accroches 13a, 13b sont situés à l'avant de l'accoudoir 3, démuni de bordure tandis que deux autres éléments d'accroches 13c, 13d sont positionnées sur la bordure à l'extrémité arrière de l'accoudoir 3. Les éléments d'accroches 13 possèdent une extrémité libre en biseau 16 dirigé suivant la flèche 30, c'est-à-dire suivant la direction longitudinale de l'accoudoir 3, l'accoudoir 3 étant lui-même monté sur la garniture de la portière 2 suivant l'axe du véhicule et dirigé vers l'avant.

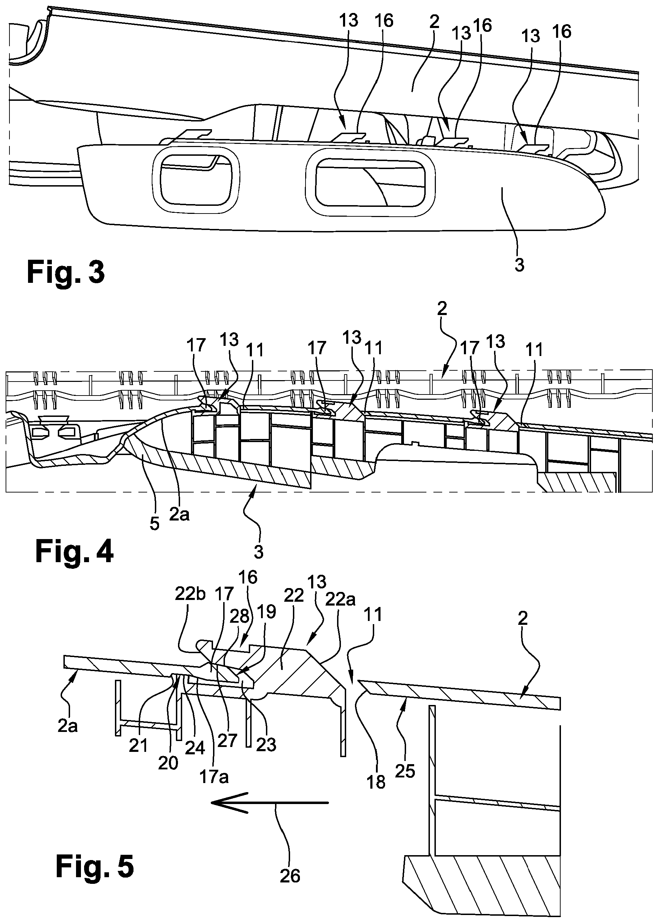

La figure 3 présente une vue schématique partielle en perspective du garnissage d'une portière 2 sur laquelle, on présente un accoudoir 3 pour effectuer son montage sur la dite portière 2. Sur la vue, on voit les éléments d'accroches 13 en saillie dont les biseaux 16 sont dirigés vers l'avant dans le sens longitudinal du véhicule.

La figure 4 présente une vue partielle en plan de dessus de la face interne d'une portière 2 sur laquelle l'accoudoir 3 représenté partiellement est monté dans sa position d'utilisation. Les éléments d'accroche 13 répartis à l'intérieur de la périphérie de l'accoudoir 3 sont engagés et bloqués dans des moyens de rétention 17 ménagés à une extrémité des fentes 11 de l'accoudoir 3. L'extrémité avant 5 de l'accoudoir 3 vient s'ajuster et épouser la forme courbée 2a de la portière 2.

La figure 5 est une vue partielle en section agrandie d'un élément d'accroche 13 en prise dans un moyen de rétention 17 sous forme d'une proéminence formée à l'extrémité d'une fente 11 de la face interne 2a d'une portière 2. L'accoudoir 3 est monté dans sa position d'utilisation sur la portière 2 où il est fixé fermement. La garniture de la portière 2 comporte une pluralité de fentes 11 dont les extrémités 18, 19 sont obliques. L'extrémité 18 est oblique à l'extérieur tandis que l'extrémité 19 est oblique à l'intérieur. De plus, l'extrémité 19 située vers l'avant comporte une proéminence 17 possédant à l'extérieur à la base de la proéminence 17 une forme en creux 20 limitée par un épaulement 21. La forme en creux 20 se prolonge par un rayon de courbure 17a sur la partie courante de la proéminence 17 jusqu'à l'extrémité 19 oblique à l'intérieur. L'élément d'accroche 13 est conformé pour se glisser naturellement dans la fente 11 dans le sens du déplacement longitudinal suivant la flèche 26. A cet effet, l'élément d'accroche 13 est en saillie par rapport au bord interne de l'accoudoir 3 et vient de matière avec celui-ci. L'élément d'accroche 13 possède un corps 22 profilé et sa largeur est inférieure à la largeur de la fente 11 de manière qu'il s'y introduise librement. Le corps profilé 22 comporte un chanfrein 22a dans sa partie arrière apte à coopérer avec l'extrémité 18 oblique à l'extérieur, tandis que l'extrémité avant comporte une forme en biseau 16 dont l'extrémité comporte un chanfrein 22b apte à coopérer avec l'extrémité 19 oblique à l'intérieur de manière à faciliter l'introduction du biseau 16. Par ailleurs, le biseau 16 génère une entaille formant un logement 23, dont une paroi 27 est inclinée pour venir coopérer avec une paroi inclinée 28 de la proéminence 17 qui vient s'introduire dans le logement 23. A l'avant du logement 23, placé en vis-à-vis du biseau 16, une saillie 24 de forme sensiblement carrée est présente. Les éléments d'accroche 13 sont répartis sur le pourtour de l'accoudoir 3 et tous orientés dans le même sens. On comprend que pour assembler l'accoudoir 3 sur la garniture de la porte 2, on approche l'accoudoir 3 de la zone en retrait 10, les éléments d'accroches 13 sont guidés sur la paroi externe 25, tout en poussant l'accoudoir sur le garnissage, lorsque les éléments d'accroche 13 sont en regard des fentes 11 ils s'y engagent naturellement du fait de la coopération du chanfrein 22a apte à coopérer avec l'extrémité 18 oblique de la fente 11. Puis en exerçant une force suivant un sens parallèle au garnissage, l'introduction du biseau 16 est facilitée par le chanfrein 22b apte à coopérer avec l'extrémité 19 oblique à l'intérieur. De plus, le biseau 16 vient coiffer la proéminence 17 et s'introduit dans le logement 23. La paroi 27 du biseau 16 inclinée vient coopérer avec la paroi 28 inclinée de la proéminence 17 sur sa surface intérieure, tandis que la saillie 24 placée à l'extérieur s'engage dans le creux 20 permettant son verrouillage. On comprend que la proéminence 17 est engagée en force et elle est immobilisée par coincement entre le biseau 16 et la saillie 24 permettant l'assemblage et la tenue de l'accoudoir 3 sur la garniture de la portière 2.Plus particulièrement, les couples des surfaces repérées 22a, 18 coopèrent entre elles pour faciliter l'engagement des éléments d'accroches 13 dans les fentes 11. Les couples des surfaces repérées 22b, 19 coopèrent entre elles pour faciliter l'engagement de la proéminence 17 des éléments d'accroches 13 dans le logement 23. Les couples des surfaces repérées 20, 24 coopèrent entre elles pour verrouiller les éléments d'accroches 13, lorsque les couples de surfaces repérées 27, 28 coopèrent ensemble pour bloquer les proéminences 17 des éléments d'accroches 13. Avantageusement, le montage de l'accoudoir 3 est effectué en engageant La pluralité des éléments d'accroches 13 dans les fentes 11 suivant l'axe longitudinal du véhicule. La pluralité des éléments d'accroches 13 facilite le montage de l'accoudoir 3 sur la garniture de la portière 2 permettant d'obtenir un guidage fluide lors de l'assemblage et un accouplement robuste.

## Revendications

1. Agencement (1) de l'assemblage d'un accoudoir (3) sur la garniture d'une portière (2), l'agencement (1) comportant ladite garniture (2) et ledit accoudoir (3), **caractérisé en ce que** l'accoudoir (3) est une coque, et est assemblé sur des moyens de rétention (17) de la garniture de la portière (2) conçu sur un bord d'ouvertures (11), par des moyens de clippage (13) dirigés suivant une direction latérale de la portière (2) qui correspond à la direction longitudinale de l'accoudoir (3), les moyens de clippage (13) étant constitués sous la forme d'éléments d'accroche comprenant un corps (22) prolongé par un biseau (16) et sont répartis sur le pourtour interne de la coque formant l'accoudoir (3).

2. Agencement (1) selon la revendication 1, **caractérisé en ce que** les moyens de clippage (13) sont en saillie par rapport au bord de l'accoudoir (3).

3. Agencement (1) selon l'une des revendications 1 ou 2, **caractérisé en ce que** l'élément d'accroche (13) comporte un logement (23) dont la largeur se rétrécit suivant une paroi inclinée en direction du fond.

4. Agencement (1) selon la revendication 3, **caractérisé en ce que** le logement (23) comporte à proximité de son ouverture (11) une saillie (24) de forme carrée orientée vers l'extrémité du biseau (16) .

5. Agencement (1) selon l'une des revendications 1 à 4, **caractérisé en ce que** les moyens de rétention (17) sont constitués de proéminence à l'extrémité des ouvertures (11) réparties sur la garniture de la portière (2) de manière à permettre l'introduction des éléments d'accroche (13).

6. Agencement (1) selon la revendication 5, **caractérisé en ce que** les ouvertures (11) sont des fentes comportant une extrémité oblique (18) vers l'extérieur et une seconde extrémité oblique (19) vers l'intérieur aptes à coopérer avec des chanfreins (22a, 22b) du moyen de clippage (13) de façon à faciliter l'engagement des dits moyens de clippage (13) sur la proéminence (17).

7. Agencement (1) selon l'une quelconque des revendications 5 ou 6, **caractérisé en ce que** la proéminence (17) comporte sur sa surface interne une paroi inclinée (28) apte à coopérer avec la paroi inclinée (27) du moyen de clippage (13).

8. Agencement (1) selon la revendication7, **caractérisé en ce que** la paroi inclinée (28) de la proéminence (17) coopère avec la paroi inclinée (27) ménagée sur le biseau (16) lors de l'engagement de la saillie (24) de forme carrée se verrouillant dans un creux (20) localisé à la base de la proéminence (17), réalisant la tenue de l'accoudoir (3) sur la garniture de la portière (2) par coincement.

## Patentansprüche

1. Anordnung (1) der Verbindung einer Armlehne (3) mit der Türverkleidung (2), wobei die Anordnung (1) die genannte Verkleidung (2) und die genannte Armlehne (3) umfasst, **dadurch gekennzeichnet, dass** die Armlehne (3) eine Schale ist und mit Haltemitteln (17) der Türverkleidung (2) verbunden ist, die an einem Rand von Öffnungen (11) durch Clipmittel (13) ausgebildet ist, die in einer seitlichen Richtung der Tür (2) ausgerichtet sind, die der Längsrichtung der Armlehne (3) entspricht, Klammermittel (13) in Form von Klammerelementen mit einem Körper (22), der durch eine Abschrägung (16) verlängert ist und über den Innenumfang der die Armlehne (3) bildenden Schale verteilt ist.

2. Anordnung (1) nach Anspruch 1, **dadurch gekennzeichnet, dass** die Einrastmittel (13) in Bezug auf den Rand der Armlehne (3) vorstehen.

3. Anordnung (1) nach einem der Ansprüche 1 oder 2, **dadurch gekennzeichnet, dass** das Hakenelement (13) eine Aufnahme (23) aufweist, deren Breite sich in einer zum Boden hin geneigten Wand verjüngt.

4. Anordnung (1) nach Anspruch 3, **dadurch gekennzeichnet, dass** die Aufnahme (23) in der Nähe ihrer Öffnung (11) einen quadratischen Vorsprung (24) aufweist, der zum Ende der Abschrägung (16) hin gerichtet ist.

5. Anordnung (1) nach einem der Ansprüche 1 bis 4, **dadurch gekennzeichnet, dass** die Rückhaltemittel (17) aus Vorsprüngen am Ende der Öffnungen (11) bestehen, die auf der Verkleidung der Tür (2) verteilt sind, um das Einführen der Hakenelemente (13) zu ermöglichen.

6. Anordnung (1) nach Anspruch 5, **dadurch gekennzeichnet, dass** die Öffnungen (11) Schlitze sind, die ein schräges Ende (18) nach außen und ein zweites schräges Ende (19) nach innen aufweisen, das mit Abschrägungen (22a, 22b) der Clipsmittel (13) zusammenwirken kann, um den Eingriff der Clipsmittel (13) mit dem Vorsprung (17) zu erleichtern.

7. Anordnung (1) nach einem der Ansprüche 5 oder 6, **dadurch gekennzeichnet, dass** der Vorsprung (17) auf seiner Innenfläche eine geneigte Wand (28) aufweist, die mit der geneigten Wand (27) des Einclipsmittels (13) zusammenwirken kann.

8. Anordnung (1) nach Anspruch 7, **dadurch gekennzeichnet, dass** die geneigte Wand (28) des Vorsprungs (17) mit der geneigten Wand (27) zusammenwirkt, die auf der Abschrägung (16) ausgebildet ist, wenn der quadratische Vorsprung (24) in eine Vertiefung (20) eingreift, die an der Basis des Vorsprungs (17) angeordnet ist, wodurch die Armlehne (3) auf der Verkleidung der Tür (2) durch Verkeilen gehalten wird.

## Claims

1. Arrangement (1) for assembling an armrest (3) to the lining of a door (2), the arrangement (1) comprising said lining (2) and said armrest (3), **characterized in that** the armrest (3) is a shell, and is assembled on means (17) for retaining the lining of the door (2) designed on an edge of openings (11), by clipping means (13) directed along a lateral direction of the door (2) which corresponds to the longitudinal direction of the armrest (3), clipping means (13) being constituted in the form of hooking elements comprising a body (22) extended by a bevel (16) and are distributed over the inner periphery of the shell forming the armrest (3).

2. Arrangement (1) according to claim 1, **characterized in that** the clipping means (13) project from the edge of the armrest (3).

3. Arrangement (1) according to one of Claims 1 or 2, **characterized in that** the fastening element (13) has a receptacle (23), the width of which narrows along a wall inclined towards the bottom.

4. Arrangement (1) according to claim 3, **characterized in that** the housing (23) has a square-shaped projection (24) in the vicinity of its opening (11), which projection (24) faces the end of the bevel (16).

5. Arrangement (1) according to one of Claims 1 to 4, **characterized in that** the retaining means (17) are formed by protrusions at the end of the openings (11) distributed over the door lining (2) so as to allow the insertion of the fastening elements (13).

6. An arrangement (1) according to claim 5, **characterized in that** the openings (11) are slots having an outwardly oblique end (18) and a second inwardly oblique end (19) adapted to cooperate with chamfers (22a, 22b) of the clipping means (13) so as to facilitate the engagement of said clipping means (13) on the projection (17).

7. Arrangement (1) according to either of Claims 5 and 6, **characterized in that** the protuberance (17) has on its internal surface an inclined wall (28) able to cooperate with the inclined wall (27) of the clipping means (13).

8. Arrangement (1) according to Claim 7, **characterized in that** the inclined wall (28) of the projection (17) cooperates with the inclined wall (27) formed on the bevel (16) when the square-shaped projection (24) is engaged and locks into a recess (20) located at the base of the projection (17), thereby holding the armrest (3) on the door lining (2) by wedging.
